# EUROPEAN PATENT APPLICATION

(11) **EP 1 219 185 A2**
(43) Date of publication of application: **03.07.2002**
(21) Application number: 01205105.8
(22) Date of filing: 27.12.2001
(51) Int. Cl.: A23P 1/08

(54) **Edible container based on potato or rice**

(30) Priority: 27.12.2000 NL 1016993
(71) Applicant: Teeuwen, Gerardus Leonardus Mathieu, 6040 AH Roermond (NL)
(72) Inventor: Teeuwen, Gerardus Leonardus Mathieu, 6040 AH Roermond (NL)
(74) Representative: Jorritsma, Ruurd

(57) **Abstract**

A shaped edible product, such as a carrier or container, consisting of potato or rice, which is intended for accommodating an edible topping or filling of, for example, meat, fish, vegetables and the like, is coated externally with an egg product or a fat product. The external surface can also comprise a coating of breadcrumbs. Such a shaped product is suitable not only for use in a fast food restaurant or snack bar, but also for home consumption. It is sufficient to deep-fry the shaped product and then fill it with a garnish.

## Description

The invention relates to the field of food products that are relatively easy to prepare, which are also known by the term "convenience foods". Such food products can be prepared in particular in relatively large numbers in a factory, in such a way that they are suitable for storage for a limited period of time. Immediately before consumption, the final preparation of the product can then be carried out, usually by heating and/or the addition of garnish. The product concerned is a shaped product, such as a carrier or container consisting of potato or rice, and intended for accommodating an edible topping or filling, such as meat, fish, vegetables and the like.

The object of the invention is to produce a semi-finished product for such a convenience food, which product represents a preliminary stage of the food product ultimately to be prepared, and which product can be completed immediately before consumption. That object is achieved by the fact that the external surface of the shaped product is coated with an egg product or a fat product.

Such a shaped product is suitable not only for use in a fast food restaurant or snack bar, but also for home consumption. It is sufficient to deep-fry the shaped product and then fill it with a garnish.

The inside of the shaped product can contain the same material as the outside layer, such as potato or rice, but it can also contain a different material, such as vegetables and herbs.

The shaped product preferably has a bottom with a raised peripheral edge.

The invention also relates to a method for preparing a food product, comprising the following steps:
- the provison of a shaped product, such as a carrier or container, consisting of potato or rice, and intended for accommodating an edible topping or filling, such as meat, fish, vegetables and the like;
- the coating of the shaped product with egg and/or fat;
- the coating of the shaped product with breadcrumbs;
- the heating of the shaped product.

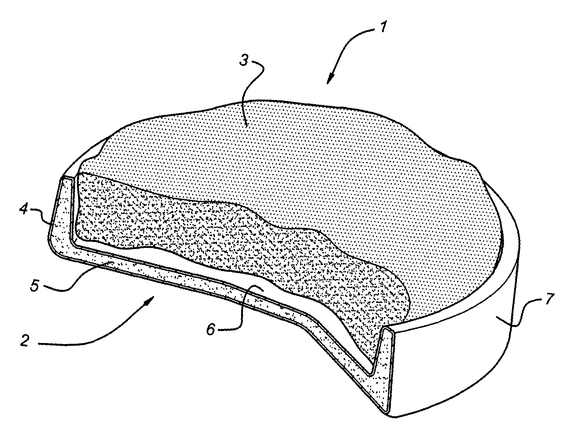

The_invention will be explained in greater detail below with reference to an exemplary embodiment shown in the figure. The figure shows a food product 1, which consists of the shaped product 2 according to the invention, and also a filling 3 of, for example, meat, fish, vegetables and the like.

The shaped product 2 according to the invention consists of raw or pre-cooked potato or of boiled, pre-cooked rice. The external surface 4 of the shaped product can be crisp or hard, while the inside 5 of the shaped product is soft. This crisp external surface 4 is obtained by deep-frying, but heating the external surface by microwaving can also produce such a texture.

The shaped product 2 has a bottom 6, and also a raised edge 7, so that the filling 3 can easily be accommodated.

The potato product can be obtained by pulverizing potatoes, making a paste of that pulverized product, and subsequently finishing off said paste product in the oven. As an alternative, a raw potato product can also be used.

The rice product is obtained by boiling the rice, then making a paste of it, which paste product is finished off in the oven.

The product is preferably supplied as a frozen product.

## Claims

1. Shaped product (2), such as a carrier or container, consisting of potato or rice, and intended for accommodating an edible topping (3) or filling, such as meat, fish, vegetables and the like, **characterized in that** the external surface (4) comprises a coating of egg product and/or fat product.

2. Product according to Claim 1, in which the external surface (4) comprises a coating of breadcrumbs.

3. Product according to one of the preceding claims, in which the soft inside (5) comprises a boiled, pre-cooked rice product.

4. Product according to one of the preceding claims, in which the soft inside (5) comprises a boiled, pre-cooked potato product.

5. Product according to one of the preceding claims, in which the soft inside (5) comprises vegetables and herbs.

6. Product according to one of the preceding claims, comprising a bottom (6) with a raised peripheral edge (7).

7. Method for preparing a food product, comprising the following steps:
- the provision of a shaped product (2), such as a carrier or container consisting of potato or rice, and intended for accommodating an edible topping (3) or filling, such as meat, fish, vegetables and the like;
- the coating of the shaped product (2) with egg and/or fat;
- the coating of the shaped product (2) with breadcrumbs;
- the heating of the shaped product (2).

8. Method according to Claim 7, comprising heating by immersion in hot oil and/or hot liquid fat.

9. Method according to Claim 7 or 8, comprising heating by microwaving or hot air.

10. Method according to one of Claims 7-9, comprising the provision of a filling or topping, such as meat, fish, vegetables or a combination of the latter.
